# EUROPÄISCHE PATENTSCHRIFT

(11) **EP 0 569 698 B1**
(45) Veröffentlichungstag und Bekanntmachung des Hinweises auf die Patenterteilung: **17.01.1996**
(21) Anmeldenummer: 93105381.3
(22) Anmeldetag: 01.04.1993
(51) Int. Cl.: B60T 13/66, B60T 17/22

(54) **Verfahren zur Überwachung der wenigstens einen Motorfahrzeugbremse des Motorfahrzeugs eines Fahrzeugzuges auf Überlast**
Mehtod for surveillance of overload of a tractor brake of a tractor-trailer combination
Procédé pour contrôle de surcharge d'un frein d'un tracteur d'un convoi routier

(30) Priorität: 09.05.1992 DE 4215340
(43) Veröffentlichungstag der Anmeldung: 18.11.1993
(73) Patentinhaber: WABCO STANDARD GmbH, D-53008 Bonn (DE)
(72) Erfinder: Schappler, Hartmut, W-3000 Hannover 91 (DE); Stender, Axel, W-3257 Springe 2 (DE)
(74) Vertreter: Schrödter, Manfred, Dipl.-Ing.

(56) Entgegenhaltungen:
- EP-A- 0 188 685
- EP-A- 0 320 602
- WO-A-87/05571

## Beschreibung

Die Erfindung betrifft ein Verfahren zur Überwachung der wenigstens einen Motorfahrzeugbremse auf Überlast gemäß der Gattung des Patentanspruchs 1 und eine Anordnung zur Durchführung des Verfahrens gemäß der Gattung des Patentanspruchs 7.

Ein solches Verfahren zur Überwachung wenigstens einer Fahrzeugbremse auf Überlast ist aus der DE 30 18 188 A1 bekannt. Dieses Verfahren ist zur Überwachung von Fahrzeugbremsen aller Arten, also auch zur Überwachung der wenigstens einen Motorfahrzeugbremse der gattungsbildenden Art, und damit vorliegend zur Gattungsbildung geeignet. Dieses Verfahren betrachtet bei einer Bremsung den durch ein Energieanforderungssignal in Gestalt einer Ist-Pedalkraft und das sich dabei ergebende Ist-Bremsmoment bestimmten Punkt eines Bremsmoment/Energieanforderungssignal-Kennfelds. Das Verfahren erkennt auf Überlast, wenn bei gegebenem Ist-Energieanforderungssignal der betrachtete Punkt aus einem Bereich "guter Bremsenzustand" nach unten hinauswandert.

Das bekannte Verfahren setzt zu seiner Durchführung den Einsatz eines Bremsmomentsensors an jeder überwachten Fahrzeugbremse und damit einen erheblichen Aufwand voraus.

Der Erfindung liegt die Aufgabe zugrunde, ein Verfahren der eingangs genannten Art mit weniger Aufwand durchführbar zu machen.

Diese Aufgabe wird durch die in den Patentansprüchen 1 und 7 angegebene Erfindung gelöst. Vorteilhafte Fortbildungen und Anordnungen zur Durchführung der Erfindung sind in den Unteransprüchen angegeben.

Im Sinne der Erfindung ist eine Motorfahrzeugbremse bzw. eine Anhängerbremse der jeweilige Bestandteil einer Motorfahrzeugbremsanlage bzw. einer Anhängerbremsanlage, der unmittelbar die Bremskraft erzeugt. Im Falle einer nicht verschleißfreien Bremse ist dies eine Baugruppe, die aus der Radbremse, der Zuspanneinrichtung und etwaigen dazwischen angeordneten Übertragungsgliedern besteht.

Die Erfindung wertet auf weiter unten näher beschriebene Weise die bekannte Tatsache aus, daß eine überlastete Fahrzeugbremse bei gegebenem Energieanforderungssignal einem Bremskraftabfall zeigt. Für diese Erscheinung ist der Begriff "Fading" eingebürgert.

Die Erfindung ist für jede Art Energie geeignet. Beispielhaft seien Druck einschließlich der Druckdifferenz zwischen Umgebungsdruck und einem Unterdruck, elektrische Energie oder menschliche Kraft erwähnt. Im Falle des Drucks als Energie sind als Energieträger beispielsweise Druckluft und hydraulische Druckmittel sowie Kombinationen daraus gebräuchlich. Es ist auch üblich, für die Bremsbetätigung und die Betätigungssteuerung unterschiedliche Energiearten einzusetzen, beispielsweise Druck als Betätigungsenergie und elektrische Energie als Steuerenergie. Die oben erwähnte Zuspanneinrichtung ist im Falle von Druck als Energie üblicherweise als Bremszylinder ausgebildet.

Weitere Vorteile der Erfindung werden in deren nachfolgender Beschreibung anhand von in Zeichnungen dargestellten Ausführungsbeispielen angegeben. Unter durchgehender Verwendung gleicher Bezugszeichen für Elemente mit gleicher Funktion, ausgezogener Linien für (Betätigungs-) Energieleitungen, gestrichelter Linien für Steuerleitungen und strichpunktierter Linien für Signalleitungen zeigen
- Figur 1: schematisch einen Fahrzeugzug mit Motorfahrzeugbremse und Anhängerbremse sowie Einrichtung zur Überwachung der Motorfahrzeugbremse auf Überlast,
- Figur 2: schematisch eine andere Ausgestaltung des Fahrzeugzuges nach Figur 1.

Im folgenden gelten alle für den Fahrzeugzug mit ziehendem Motorfahrzeug gemachten Ausführungen entsprechend für den Fahrzeugzug mit schiebendem Motorfahrzeug, wie er beispielsweise im Schienenverkehr und im Rangierbetrieb von Straßen-Fahrzeugzügen üblich ist.

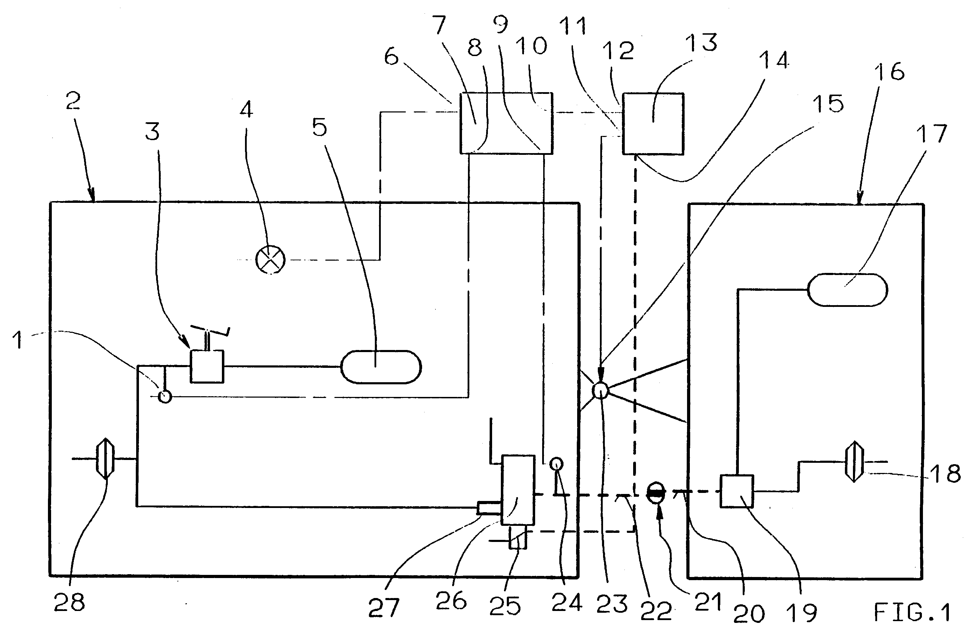

Der in Figur 1 dargestellte Fahrzeugzug besteht aus einem Motorfahrzeug und einem von diesem gezogenen Anhänger, die generell mit (2) bzw. (16) bezeichnet und über eine Kupplung (23) miteinander verbunden sind. Die Kupplung (23) ist, je nach Bauart des Fahrzeugzugs als Deichselzug oder Sattelzug, eine Deichselkupplung oder eine Sattelkupplung.

Das Motorfahrzeug (2) enthält eine Motorfahrzeugbremse (28), der Anhänger (16) enthält eine Anhängerbremse (18), die beide durch Energiezufuhr betätigbar und symbolisch durch ihre Zuspanneinrichtungen dargestellt sind. Jede der genannten Bremsen kann die einzige des betreffenden Fahrzeugs sein, aber auch stellvertretend für eine Mehrzahl von Bremsen stehen.
Die Motorfahrzeugbremse (28) ist Bestandteil einer Motorfahrzeugbremsanlage (3, 5, 26, 28), die außerdem aus einem Motorfahrzeugenergievorrat (5), einem Bremswertgeber (3), einem Anhängerenergieeinsteller (26) sowie den zugehörigen Energieleitungen besteht. Der Bremswertgeber (3) ist einerseits mit dem Energievorrat (5) und andererseits mit der Motorfahrzeugbremse (28) sowie einem ersten Steuereingang (27) des Anhängerenergieeinstellers (26) verbunden. Der Anhängerenergieeinsteller (26) weist einen zweiten, elektrischen, Steuereingang (25) auf, auf den weiter unten näher eingegangen wird.

Die Anhängerbremse (18) ist Bestandteil einer Anhängerbremsanlage (17, 18, 19), die außerdem aus einem Anhängerenergievorrat (17) und einer Anhängersteuereinrichtung (19) sowie den zugehörigen Energieleitungen besteht. Der oder ein Steuereingang der Anhängersteuereinrichtung (19) ist über eine teils im Motorfahrzeug (2), teils im Anhänger (16) angeordnete und eine Steuerkupplung (21) enhaltende Anhängersteuerleitung (20, 21, 22) mit dem Ausgang des Anhängerenergieeinstellers (26) im Motorfahrzeug (2) verbunden.

Die Motorfahrzeugbremsanlage (3, 5, 26, 28) und die Anhängerbremsanlage (17, 18, 19) können jeweils eine Betriebsbremsanlage oder ein Teil einer solchen, eine Hilfsbremsanlage oder eine (verschleißlose) Dauerbremsanlage sein, wie sie bekannt und in vielen Ländern auch durch Gesetz definiert und vorgeschrieben sind. In dem Fall, daß die Motorfahrzeugbremsanlage (3, 5, 26, 28) und/oder die Anhängerbremsanlage (17, 18, 19) Teil der Betriebsbremsanlage sind, stellen sie einen von wenigstens zwei in bekannter Weise voneinander getrennten Betriebsbremskreisen der jeweiligen vollständigen Bremsanlage dar.

Zur Energieversorgung der Energievorräte (5) und (17) sowie des Anhängerenergieeinstellers (26) ist im Motorfahrzeug (2) noch eine in bekannter Weise aufgebaute und nicht dargestellte Energiebeschaffungsanlage einschließlich der zugehörigen Verteilungs- und Sicherungseinrichtungen sowie Energieleitungen angeordnet.

Die bisher erwähnten Bestandteile der Bremsanlagen sind für sich und in ihrem Zusammenwirken bekannt. Wenn als Energie Druck und als Energieträger ein oder mehrere Druckmittel dienen, sind die Energievorräte (5) und (17) als Druckspeicher, der Bremswertgeber (3) als fuß- oder handbetätigtes Ventil, der Anhängerenergieeinsteller (26) als Anhängersteuerventil und die Anhängersteuereinrichtung (19) als Anhängerbremsventil ausgebildet.

Zwecks Bremsung leitet der Fahrzeugführer ein Energieanforderungssignal in Form einer Betätigungskraft und / oder eines Betätigungsweges in den Bremswertgeber (3) ein. Dieser läßt daraufhin aus dem Energievorrat (5) Energie zu der Motorfahrzeugbremse (28) und den ersten Steuereingang (27) des Anhängerenergieeinstellers (26) durch, deren Wert von dem Wert des Energieanforderungssignals bestimmt ist. Der Wert der durchgelassenen Energie ist also repräsentativ für das in den Bremswertgeber (3) eingeleitete Energieanforderungssignal, so daß gesagt werden kann, daß der Bremswertgeber (3) zugleich ein Energieanforderungssignal empfängt und abgibt. Durch die Beaufschlagung seines ersten Steuereingangs (27) wird der Anhängerenergieeinsteller (26) veranlaßt, über die Anhängersteuerleitung (20, 21, 22) ein entsprechendes Anhängerenergiesignal an die Anhängersteuereinrichtung (19) abzugeben. Diese wird dadurch veranlaßt, aus dem Anhängerenergievorrat (17) Energie mit einem dem Wert des Anhängerenergiesignals entsprechenden Wert zu der Anhängerbremse (18) durchzulassen. Vor Zuführung der von dem Bremswertgeber (3) bzw. von der Anhängersteuereinrichtung (19) durchgelassenen Energie zu der jeweiligen Bremse (28 bzw. 18) kann diese Energie in bekannter Weise durch weitere Einrichtungen wie beispielsweise lastabhängige Bremsdruckregler beeinflußt werden. Infolge der Energiezufuhr erzeugen die Motorfahrzeugbremse (28) und die Anhängerbremse (18) dem Wert der jeweils zugeführten Energie entsprechende Bremskräfte.

Mittels des Bremswertgebers (3) steuert also der Fahrzeugführer den Einsatz und bestimmt oder bestimmt mit die Wirkung der Motorfahrzeugbremse (28) und der Anhängerbremse (18).

Dieser Steuerung ist eine Kupplungskraftregelung überlagert. Diesem Zweck dienen ein Kraftsensor (15) und ein Regler (13). Der Kraftsensor (15), dessen Ausgang mit einem Eingang (11) des Reglers (13) verbunden ist, ist an der Kupplung (23) angeordnet. Der Ausgang (14) des Reglers (13) ist mit dem zweiten Steuereingang (25) des Anhängerenergieeinstellers (26) verbunden. Bei einer Bremsung erfaßt der Kraftsensor (15) die in der Kupplung (23) anstehende Kupplungskraft und gibt ein entsprechendes Kraftsignal an den Regler (13) ab. Der Regler (13) prüft, ob das Kraftsignal von einem vorbestimmten Sollwert abweicht. Ist das der Fall, gibt der Regler (13) an den zweiten Steuereingang (25) des Anhängerenergieeinstellers (26) ein Steuersignal ab, welches den Anhängerenergieeinsteller (26) veranlaßt, das durch den Wert der Energie an seinem ersten Steuereingang (27) bestimmte Anhängerenergiesignal in der Anhängersteuerleitung (20, 21, 22) und damit die von der Anhängerbremse (18) erzeugte Bremskraft so zu modulieren, daß die festgestellte Abweichung des Kraftsignals des Kraftsensors (15) von dem Sollwert verschwindet. Der Sollwert kann bei einem Deichselzug je nach Auslegung null oder einen zulässigen Wert in Aufschieberichtung oder Zugrichtung betragen und wird bei einem Sattelzug - stets in Aufschieberichtung - vom Wert der Sattellast bestimmt.

Im Ausführungsbeispiel erfolgt die Einstellung des Anhängerenergiesignals mittels des Anhängerenergieeinstellers (26) im Motortfahrzeug (2). Es ist aber in nicht dargestellter Weise auch möglich, diese Einstellung mittels eines zweiten, elektrischen, Steuereingangs der Anhängerenergiesteuereinrichtung (19) im Anhänger (16) vorzunehmen.

In diesem Falle würde die der Anhängerbremse (18) zugeführte Energie das Anhängerenergiesignal zur Verfügung stellen. Bei dieser Ausgestaltung bedürfte der Anhängerenergieeinsteller (26) nicht des zweiten Steuereingangs (25).

Durch die Kupplungskraftregelung wird die durch die Anhängerbremse (18) bewirkte Anhängerverzögerung an die durch die Motorfahrzeugbremse (28) bewirkte Motorfahrzeugverzögerung angeglichen oder weitgehend angeglichen, so daß bei einer Bremsung über die Kupplung (23) keine bzw. nur eine Kraft von zulässiger Größe von dem Anhänger (16) auf das Motorfahrzeug (2) übertragen wird. Dadurch werden bei einer Bremsung die Gefahr des Einknickens des Fahrzeugzuges durch Aufschieben bzw. zu starkes Aufschieben des Anhängers (16) beseitigt und damit die Richtungsstabilität des Fahrzeugzuges erheblich verbessert.

Auch die erwähnten Bauteile der Kupplungskraftregelung sind für sich und in ihrem Zusammenwirken bekannt.

Hat bei einer Bremsung die Kupplungskraftregelung ihr Regelungsziel erreicht, hat das Kraftsignal also seinen Sollwert angenommen, dann nimmt das Anhängerenergiesignal bei einem gegebenen, von dem Bremswertgeber (3) empfangenen oder abgegebenen, Energieanforderungssignal den Wert eines Normal-Anhängerenergiesignals an. Dieser Wert hängt von dem Beladungszustand des Motorfahrzeugs (2) und dem Beladungszustand des Anhängers (16) ab. Bevor die Kupplungskraftregelung ihr Regelungsziel erreicht, treten Abweichungen des Anhängerenergiesignals von dem Wert des Normal-Anhängerenergiesignals auf. Das gleiche gilt nach dem Erreichen des Regelungsziels infolge von Störungen. Diese Abweichungen treten jedoch wegen des vor dem Erreichen des Regelungsziels noch andauernden bzw. bei Störungen sofort einsetzenden Eingriffs des Reglers (13) nur vorübergehend auf.

Wird die Motorfahrzeugbremse (28) im Verlauf einer Bremsung überlastet, dann fällt die von ihr erzeugte Bremskraft bei unverändertem Energieanforderungssignal ab. Ohne die Kupplungskraftregelung hätte dieses Fading bei intakter Anhängerbremse (18) ein Ziehen bzw. ein stärkeres Ziehen bzw. ein geringeres Aufschieben des Anhängers (16) und damit eine Kupplungskraft in Zugrichtung bzw. eine Verringerung der Kupplungskraft in Aufschieberichtung bzw. eine größere Kupplungskraft in Zugrichtung zur Folge. Dem wirkt jedoch die Kupplungskraftregelung durch Herabsetzung des Anhängerenergiesignals und damit durch Verringerung der Energiezufuhr zu der Anhängerbremse (18) und Verringerung der von dieser erzeugten Bremskraft entgegen. Der so erzeugte Abfall des Anhängerenergiesignals von dem Normal-Anhängerenergiesignal tritt nicht vorübergehend auf, sondern bleibt während der gesamten Dauer des Fadings der Motorfahrzeugbremse (28) bestehen.

Ist die Motorfahrzeugbremse (28) bei Beginn einer Bremsung von früheren Bremsungen her überlastet, so zeigt das Anhängerenergiesignal von Beginn der Bremsung an während der gesamten Dauer der Überlastung einen Abfall von dem Normal-Anhängerenergiesignal.

Ein nicht nur vorübergehender Abfall des Anhängerenergiesignals bei gegebenem Energieanforderungssignal ist also ein Indiz für eine Überlastung der Motorfahrzeugbremse (28).

Diese Erkenntnis macht sich eine in dem Ausführungsbeispiel noch enthaltene Einrichtung (1, 7, 24) zur Überwachung der Motorfahrzeugbremse (28) auf Überlast zunutze. Diese Einrichtung besteht aus einem Motorfahrzeugenergiesensor (1), einem Anhängerenergiesensor (24) und einer Auswerteschaltung (7). Die Ausgänge des Motorfahrzeugenergiesensors (1) und des Anhängerenergiesensors (24) sind mit Eingängen (8, 9) der Auswerteschaltung (7) verbunden. Der Motorfahrzeugenergiesensor (1) erfaßt das von dem Bremswertgeber (3) abgegebene Energieanforderungssignal. Er kann aber auch in bekannter und deshalb nicht dargestellter Weise das dem Bremswertgeber (3) zugeführte Energieanforderungssignal erfassen.

Der Anhängerenergiesensor (24) erfaßt das Anhängerenergiesi-gnal in der Anhängersteuerleitung (20, 21, 22). Er kann aber auch, wenn die Einstellung des Anhängerenergiesignals im Anhänger (16) erfolgt, an der Energieleitung zwischen der Anhängersteuereinrichtung (19) und der Anhängerbremse (18) angeordnet sein.

Der Auswerteschaltung (7) werden außer den bereits genannten Signalen in bekannter und deshalb nicht dargestellter Weise den Beladungszustand des Motorfahrzeugs (2) und des Anhängers (16) kennzeichnende Lastsignale zugeführt. Die Auswerteschaltung (7) ist derart ausgebildet, daß sie anhand dieser Lastsignale für das vorhandene Energieanforderungssignal (Ist-Energieanforderungssignal) das Normal-Anhängerenergiesignal bestimmt, dieses mit dem vorhandenen Anhängerenergiesignal (Ist-Anhängerenergiesignal) vergleicht und ein Ausgangssignal abgibt, wenn das Ist-Anhängerenergiesignal das Normal-Anhängerenergiesignal nicht nur vorübergehend unterschritten hat.

Die Auswerteeinrichtung (7) kann desweiteren mit einem Zeitglied ausgerüstet sein, mittels dessen sie das Merkmal "nicht vorübergehend" erkennt, wenn die Unterschreitung des Normal-Anhängerenergiesignals durch das Ist-Anhängerenergiesignal eine vorbestimmte Zeitspanne gedauert hat.

Die Ansprechempflindlichkeit der Einrichtung (1, 7, 24) kann im Interesse der Vermeidung von Fehlanzeigen dadurch gedämpft werden, daß die Auswerteschaltung (7) das Ausgangssignal nur abgibt, wenn die Abweichung zwischen Ist- und Normal-Anhängerenergiesignal einen vorbestimmten Wert oder darüberhinausgehende Werte erreicht hat.

Das Ausgangssignal der Auswerteschaltung (7) kann auf jede bekannte Art ausgewertet werden. Im Ausführungsbeispiel sind zu diesem Zweck zwei Ausgestaltungen angedeutet, die gemeinsam und einzeln eingesetzt werden können. Einerseits ist ein Ausgang (6) der Auswerteschaltung (7) mit dem Eingang einer beliebig ausgestaltenen Warneinrichtung (4) verbunden, welche durch das Ausgangssignal der Auswerteschaltung (7) betätigbar ist. Andererseits weist der Regler (13) einen weiteren Eingang (12) auf, der mit einem Ausgang (10) der Auswerteschaltung (7) verbunden ist. Der Regler (13) ist derart ausgebildet, daß er bei Zuführung des Ausgangssignals der Auswerteschaltung (7) an dem Eingang (12) abgeschaltet wird, so daß also bei einem Fading der Motorfahrzeugbremse (28) die Kupplungskraftregelung außer Betrieb gesetzt wird. Dadurch wird vermieden, daß zu dem Fading der Motorfahrzeugbremse (28) ein durch die Kupplungskraftregelung bedingter Abfall der von der Anhängerbremse (18) erzeugten Bremskraft hinzutritt. Die Außerbetriebsetzung der Kupplungskraftregelung gewährleistet also bei überlasteter Motorfahrzeugbremse (28) und gegebenem Energieanforderungssignal die bestmögliche Abbremsung des Fahrzeugzuges.

Die Auswerteschaltung (7) und der Regler (13) sind außerhalb des Motorfahrzeugs (2) und des Anhängers (16) dargestellt. Dadurch soll angedeutet sein, daß jede dieser Einrichtungen körperlich sowohl in dem Motorfahrzeug (2) als auch in dem Anhänger (16) angeordnet sein kann.

Wird die Anhängerbremse (18) im Verlauf einer Bremsung überlastet, dann fällt die von ihr erzeugte Bremskraft bei unverändertem Energieanforderungssignal ab. Ohne die Kupplungskraftregelung hätte dieses Fading bei intakter Motorfahrzeugbremse (28) ein Aufschieben bzw. ein stärkeres Aufschieben bzw. ein geringeres Ziehen des Anhängers (16) und damit eine Kupplungskraft bzw. eine größere Kupplungskraft in Aufschieberichtung bzw. eine Verringerung der Kupplungskraft in Zugrichtung zur Folge. Dem wirkt jedoch die Kupplungskraftregelung durch Steigerung des Anhängerenergiesignals und damit durch Erhöhung der Energiezufuhr zu der Anhängerbremse (18) und Erhöhung der von dieser erzeugten Bremskraft entgegen. Der so erzeugte Anstieg des Anhängerenergiesignals über das NormalAnhängerenergiesignal tritt nicht vorübergehend auf, sondern bleibt während der gesamten Dauer des Fadings der Anhängerbremse (18) bestehen.

Ist die Anhängerbremse (18) bei Beginn einer Bremsung von früheren Bremsungen her überlastet, so zeigt das Anhängerenergiesignal von Beginn der Bremsung an während der gesamten Dauer der Überlastung einen Anstieg über das Normal-Anhängerenergiesignal.

Ein nicht nur vorübergehender Anstieg des Anhängerenergiesignals bei gegebenem Energieanforderungssignal ist also ein Indiz für eine Überlastung der Anhängerbremse (18).

Diese Erkenntnis kann in einer Fortbildung der Einrichtung (1, 7, 24) zur Überwachung der Motorfahrzeugbremse (28) auch zur Überwachung der Anhängerbremse (18) auf Überlast eingesetzt werden. In dieser Fortbildung ist die Auswerteschaltung (7) derart ausgebildet, daß sie das Ausgangssignal auch abgibt, wenn das Ist-Anhängerenergiesignal das Normal-Anhängerenergiesignal nicht nur vorübergehend überschritten hat. Für diese Fortbildung der Einrichtung (1, 7, 24) gelten die Ausgestaltungsmöglichkeiten entsprechend mit, die oben im Zusammenhang mit der Überwachung der Motorfahrzeugbremse (28) auf Überlast beschrieben sind. In dieser Fortbildung wird durch die Außerbetriebsetzung der Kupplungskraftregelung eine zusätzliche Überlastung der Anhängerbremse (18) durch erhöhte Energiezufuhr vermieden.

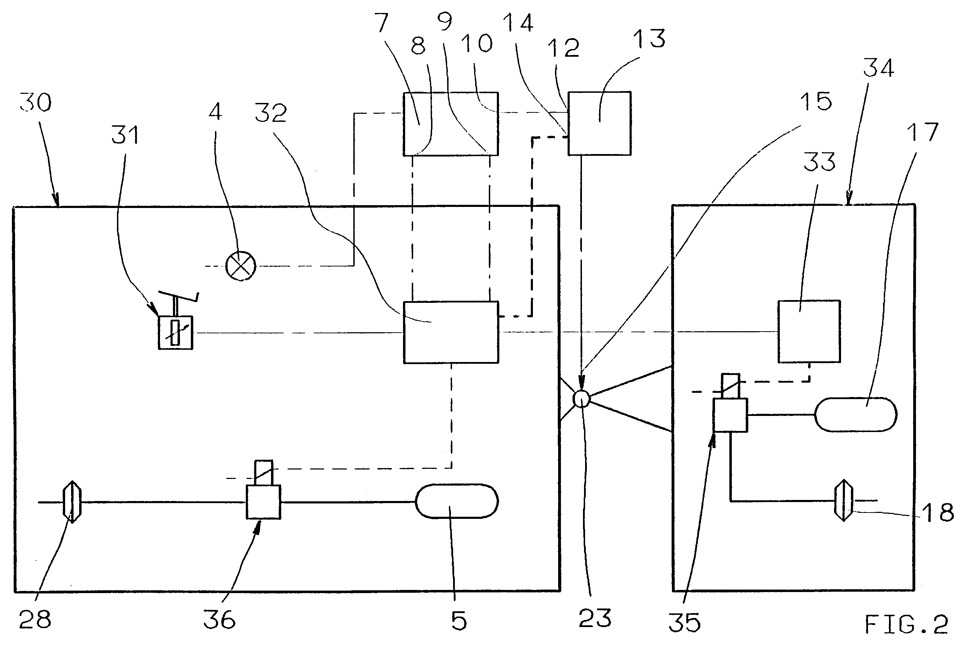

In dem in Figur 2 dargestellten Fahrzeugzug aus dem Motorfahrzeug (30) und dem Anhänger (34) werden in der Motorfahrzeugbremsanlage (5, 28, 31, 32, 36) und der Anhängerbremsanlage (17, 18, 33, 35) unterschiedliche Energiearten für die Bremsbetätigung und deren Steuerung eingesetzt, nämlich zur Steuerung elektrische Energie und als Betätigungsenergie beliebige Energie. Mit Druck als Betätigungsenergie sind solche gemischten Anlagen in Straßenfahrzeugen und Straßen-Fahrzeugzügen üblich.

Die Motorfahrzeugbremsanlage (5, 28, 31, 32, 36) besteht in diesem Fall außer aus dem Energievorrat (5) und der Motorfahrzeugbremse (28) aus einem elektrischen Bremswertgeber (31), einer Motorfahrzeugelektronik (32) und einem Energieverteiler (36).

Die Anhängerbremsanlage besteht in diesem Fall außer aus dem Energievorrat (17) und der Anhängerbremse (18) aus einer Anhängerelektronik (33) und einem Energieverteiler (35). Ein Eingang der Anhängerelektronik (33) ist mit einem Ausgang der Motorfahzeugelektronik (32) verbunden.

Die Energieverteiler (35 und 36) können die einzigen Energieverteiler des Motorfahrzeugs (30) bzw. des Anhängers (34) sein, es können aber auch je Achse und / oder je Bremse eigene Energieverteiler vorgesehen sein. Ein Energieverteiler in einem Straßenfahrzeug oder einem Straßen-Fahrzeugzug mit Druck als Betätigungsenergie wird häufig "elektrisch betätigter Druckmodulator" genannt.

Der Ausgang des Bremswertgebers (31) ist mit einem Eingang der Motorfahrzeugelektronik (32) verbunden.

Die Energieverteiler (35 und 36) besitzen jeweils einen Energieteil, an dem sie einerseits mit dem zugeordneten Energievorrat (5 bzw. 17) und andererseits mit der zugeordneten Bremse (28 bzw. 18) verbunden sind. Die Energieverteiler (35 und 36) besitzen außerdem jeweils einen elektrischen Steuerteil, dessen Eingang mit einem Ausgang der jeweiligen Elektronik (32 bzw. 33) verbunden ist.

Bei einer Bremsung setzt der Bremswertgeber (31) das vom Fahrzeugführer eingeleitete Energieanforderungssignal in ein elektrisches Energieanforderungssignal um, welches der Motorfahrzeugelektronik (32) zugeführt wird. Diese bereitet das Energieanforderungssignal zu einem Steuersignal für den Energieverteiler (36) auf. Dabei kann die Motorfahrzeugelektronik (32) je nach näherer Ausgestaltung in bekannter und deshalb nicht näher beschriebener Weise weitere, in Signalform zugeführte, Fahrzeugparameter verarbeiten. Bei Erhalt des Steuersignals läßt der Energieverteiler (36) aus dem Energievorrat (5) Energie zu der Motorfahrzeugbremse (28) durch, deren Wert von dem Wert des dem Energieverteiler (36) zugeführten Steuersignals bestimmt ist. Da, wie ausgeführt, die Motorfahrzeugelektronik (32) bei der Bildung des Steuersignals außer dem Energieanforderungssignal weitere Signale verarbeiten kann, kann der Wert der der Motorfahrzeugbremse (28) zugeführten Energie im Einzelfall von dem Energieanforderungssignal bestimmt oder mitbestimmt sein.

Die Motorfahrzeugelektronik (32) bereitet das Energieanforderungssignal auch zu einem Anhängerenergiesignal auf, welches der Anhängerelektronik (33) zugeführt wird.

Die Anhängerelektronik (33) bereitet das Anhängerenergiesignal zu einem Steuersignal für den Energieverteiler (35) auf. Für diese Aufbereitung und die Arbeitsweise des Energieverteilers (35) gelten die vorstehend für die Motorfahrzeugelektronik (32) und den Energieverteiler (36) der Motorfahrzeugbremsanlage (5, 28, 31, 32, 36) gemachten Aussagen entsprechend.

Auch dieses Ausführungsbeispiel weist eine Kupplungskraftregelung auf. Anders als beim früheren Ausführungsbeispiel ist jedoch der Ausgang (14) des Reglers (13) mit einem Eingang der Motorfahrzeugelektronik (32) verbunden. Diese verarbeitet das Steuersignal des Reglers (13) und moduliert das Anhängerenergiesignal entsprechend mit elektrischen Mitteln. Die Motorfahrzeugelektronik (32) enthält also die Funktion des Anhängerenergieeinstellers (26) des früheren Ausführungsbeispiels.

In nicht dargestellter Weise ist es auch möglich, das Steuersignal des Reglers (13) der Anhängerelektronik (33) zuzuführen und durch diese verarbeiten zu lassen. Analog zum Ausführungsbeispiel nach Figur 1 würde in diesem Falle die Einstellung des Anhängerenergiesignals zum Zwecke der Kupplungskraftregelung im Anhänger (34) erfolgen, wobei das dem Energieverteiler (35) zugeführte Steuersignal das Anhängerenergiesignal zur Verfügung stellen würde. In diesem Falle würde die Anhängerelektronik (33) die Funktion der Anhängersteuereinrichtung (19) des früheren Ausführungsbeispiels enthalten.

Das Ausführungsbeispiel weist auch die Einrichtung zur Überwachung der Motorfahrzeugbremse (28) und, gegebenenfalls, der Anhängerbremse (18) auf Überlast auf. Von dieser ist als eigenständige Baueinheit nur die Auswerteschaltung (7) dargestellt; deren das Energieanforderungssignal und das Anhängerenergiesignal aufnehmende Eingänge (8, 9) sind mit Ausgängen der Motorfahrzeugelektronik (32) verbunden, weil die genannten Signale in dieser mit rein elektrischen Mitteln erfaßt werden.

Neben der Auswerteschaltung (7) ist auch der Regler (13) der besseren Offenbarung halber als eigenständige Baueinheit dar- gestellt. Diese werden jedoch in der Regel vollständig oder teilweise in die Motorfahrzeugelektronik (32) und / oder die Anhängerelektronik (33) integriert oder auf diese aufgeteilt sein.

Im übrigen gelten die vorstehend für ein Ausführungsbeispiel gemachten Ausführungen, soweit sich aus ihnen nichts Gegenteiliges ergibt, für das andere Ausführungsbeispiel direkt oder in entsprechender Anwendung mit.

Der Fachmann erkennt, daß die vorstehenden Ausführungsbeispiele den Schutzbereich der Erfindung nicht erschöpfend beschreiben, sondern daß dieser Schutzbereich vielmehr alle Ausgestaltungen umfaßt, deren Merkmale sich den Patentansprüchen unterordnen.

## Patentansprüche

1. Verfahren zur Überwachung der durch Energiezufuhr betätigten wenigstens einen Motorfahrzeugbremse (28) eines über eine Kupplung (23) einen mit wenigstens einer Anhängerbremse (18) ausgerüsteten Anhänger (16;34) ziehenden oder schiebenden Motorfahrzeugs (2;30) auf Überlast, wobei bei einer Bremsung in dem Motorfahrzeug (2;30) ein die Energiezufuhr zu der Motorfahrzeugbremse (28) wenigstens mitbestimmendes Energieanforderungssignal erzeugt wird, aus dem ein die Anhängerbremse (18) wenigstens mitsteuerndes Anhängerenergiesignal abgeleitet wird, wobei die in der Kupplung (23) anstehende Kupplungskraft mittels des Anhängerenergiesignals geregelt wird,
dadurch gekennzeichnet,
daß auf Überlast erkannt wird, wenn bei gegebenen Energieanforderungssignal das Anhängerenergiesignal nicht nur vorübergehend abfällt.

2. Verfahren nach Anspruch 1, dadurch gekennzeichnet, daß die Erkennung auf Überlast erst bei einem vorbestimmten Wert des Abfalls des Anhängerenergiesignals erfolgt.

3. Verfahren nach einem der Ansprüche 1 oder 2, dadurch gekennzeichnet, daß eine Einstellung des Anhängerenergiesignals zum Zwecke der Kupplungskraftregelung in dem Motorfahrzeug (2;30) erfolgt.

4. Verfahren nach einem der Ansprüche 1 oder 2, dadurch gekennzeichnet, daß eine Einstellung des Anhängerenergiesignals zum Zwecke der Kupplungskraftregelung in dem Anhänger (16;34) erfolgt.

5. Verfahren nach einem der vorhergehenden Ansprüche, dadurch gekennzeichnet, daß bei Erkennung auf Überlast eine Warneinrichtung (4) betätigt wird.

6. Verfahren nach einem der vorhergehenden Ansprüche, dadurch gekennzeichnet, daß bei Erkennung auf Überlast die Kupplungskraftregelung außer Betrieb gesetzt wird.

7. Anordnung zur Überwachung der durch Energiezufuhr betätigten wenigstens einen Motorwagenbremse (28) eines über eine Kupplung (23) einen mit wenigstens einer Anhängerbremse (18) ausgerüsteten Anhänger (16; 34) ziehenden oder schiebenden Motorfahrzeugs (2; 30) auf Überlast, wobei bei einer Bremsung in dem Motorfahrzeug (2; 30) ein die Energiezufuhr zu der Motorfahrzeugbremse (28) wenigstens mitbestimmendes Energieanforderungssignal erzeugt wird, aus dem ein die Anhängerbremse (18) wenigstens mitsteuerndes Anhängerenergiesignal abgeleitet wird, wobei die in der Kupplung (23) anstehende Kupplungskraft mittels des Anhängerenergiesignals auf einen Sollwert geregelt wird, mit einem das Energieanforderungssignal erfassenden Motorfahrzeugenergiesensor (1; 32), einem das Anhängerenergiesignal erfassenden Anhängerenergiesensor (24; 32) und einer die Signale dieser Sensoren (1; 24; 32) empfangenden Auswerteschaltung (7),
dadurch gekennzeichnet,
daß die Auswerteschaltung (7) derart ausgebildet ist, daß sie für das Ist-Energieanforderungssignal das Normal-Anhängerenergiesignal, bei dem die Kupplungskraft den Sollwert annimmt, bestimmt, dieses mit dem Ist-Anhängerenergiesignal vergleicht und ein Ausgangssignal abgibt, wenn das Ist-Anhängerenergiesignal über eine vorbestimmte Zeitspanne das Normal-Anhängerenergiesignal unterschritten hat.

8. Anordnung nach Anspruch 7, dadurch gekennzeichnet, daß die Auswerteschaltung (7) das Ausgangssignal nur abgibt, wenn die Abweichung zwischen Ist- und Normal-Anhängerenergiesignal wenigstens einen vorbestimmten Wert erreicht hat.

9. Anordnung nach einem der Ansprüche 7 oder 8 mit einem die Kupplungskraft erfassenden Kraftsensor (15) und einem dessen Signal in ein Steuersignal für einen Anhängerenergieeinsteller (26;32) umsetzenden Regler (13), dadurch gekennzeichnet, daß der Anhängerenergieeinsteller (26;32) im Motorfahrzeug (2;30) angeordnet ist.

10. Anordnung nach einem der Ansprüche 7 oder 8 mit einem die Kupplungskraft erfassenden Kraftsensor (15) und einem dessen Kraftsignal in ein Steuersignal für eine Anhängersteuereinrichtung (19;33) umsetzenden Regler (13), dadurch gekennzeichnet, daß die Anhängersteuereinrichtung (19;33) im Anhänger (16;34) angeordnet ist.

11. Anordnung nach einem der vorhergehenden Ansprüche, gekennzeichnet durch eine von dem Ausgangssignal der Auswerteschaltung (7) betätigbare Warneinrichtung (4), deren Eingang mit dem wenigstens einen Ausgang (6) der Auswerteschaltung (7) verbunden ist.

12. Anordnung nach einem der Ansprüche 9 bis 11, dadurch gekennzeichnet, daß der Regler (13) von dem Ausgangssignal der Auswerteeinrichtung (7) abschaltbar ist und daß ein Eingang (12) des Reglers (13) mit dem wenigstens einen Ausgang (10) der Auswerteschaltung (7) verbunden ist.

13. Verfahren nach einem der Ansprüche 1 bis 6, dadurch gekennzeichnet,daß auf Überlast der Anhängerbremse (18) erkannt wird, wenn bei gegebenem Energieanforderungssignal das Anhängerenergiesignal nicht nur vorübergehend ansteigt.

## Claims

1. Method for monitoring for overload at least one motor vehicle brake (28), operated by energy supply, of a motor vehicle (2;30) that, via a coupling (23), pushes or tows a trailer (16;34) provided with at least one trailer brake (18), an energy demand signal being generated when braking occurs in the motor vehicle (2;30), which signal at least partly determines the energy supply to the motor vehicle brake (28) and from which there is derived a trailer energy signal that at least partly controls the trailer brake (18), the coupling force occurring in the coupling (23) being regulated by means of the trailer energy signal,
characterised in that
overload is recognised when the trailer energy signal fades not merely temporarily at the given energy demand signal.

2. Method according to claim 1, characterised in that overload is recognised only at a predetermined value of the fading of the trailer energy signal.

3. Method according to claim 1 or 2, characterised in that the trailer energy signal is adjusted for the purposes of regulating the coupling force in the motor vehicle (2;30).

4. Method according to claim 1 or 2, characterised in that the trailer energy signal is adjusted for the purposes of regulating the coupling force in the trailer (16;34).

5. Method according to any one of the preceding claims, characterised in that when overload is recognised, a warning device (4) is actuated.

6. Method according to any one of the preceding claims, characterised in that when overload is recognised, the coupling force regulation is rendered inoperative.

7. Arrangement for monitoring for overload at least one motor vehicle brake (28), operated by energy supply, of a motor vehicle (2;30) that, via a coupling (23), pushes or tows a trailer (16; 34) provided with at least one trailer brake (18), an energy demand signal being generated when braking occurs in the motor vehicle (2; 30), which signal at least partly determines the energy supply to the motor vehicle brake (28) and from which there is derived a trailer energy signal that at least partly controls the trailer brake (18), the coupling force occurring in the coupling (23) being regulated to a desired value by means of the trailer energy signal, the arrangement having a motor vehicle energy sensor (1;32) that detects the energy demand signal, a trailer energy sensor (24;32) that detects the trailer energy signal and an evaluation circuit (7) that receives the signals of those sensors (1;24;32),
characterised in that
the evaluation circuit (7) is so constructed that, for the actual energy demand signal, it determines the normal trailer energy signal at which the coupling force assumes the desired value, compares it with the actual trailer energy signal and delivers an output signal when the actual trailer energy signal has remained below the normal trailer energy signal over a predetermined time period.

8. Arrangement according to claim 7, characterised in that the evaluation circuit (7) delivers the output signal only if the difference between the actual and normal trailer energy signals has reached at least a predetermined value.

9. Arrangement according to claim 7 or 8 having a force sensor (15) that detects the coupling force and a controller (13) that converts the signal thereof into a control signal for a trailer energy adjuster (26;32), characterised in that the trailer energy adjuster (26;32) is arranged in the motor vehicle (2;30).

10. Arrangement according to claim 7 or 8 having a force sensor (15) that detects the coupling force and a controller (13) that converts the force signal thereof into a control signal for a trailer control device (19;33), characterised in that the trailer control device (19;33) is arranged in the trailer (16;34).

11. Arrangement according to any one of the preceding claims, characterised by a warning device (4) that is arranged to be actuated by the output signal of the evaluation circuit (7), the input of which is connected to at least one output (6) of the evaluation circuit (7).

12. Arrangement according to any one of claims 9 to 11, characterised in that the controller (13) is arranged to be disabled by the output signal of the evaluation device (7) and in that an input (12) of the controller (13) is connected to at least one output (10) of the evaluation circuit (7).

13. Method according to any one of claims 1 to 6, characterised in that overload of the trailer brake (18) is recognised if the trailer energy signal rises not merely temporarily at the given energy demand signal.

## Revendications

1. Procédé de surveillance, au point de vue surcharge, du frein (28), dont il y a au moins un et qui est manoeuvré par amenée d'énergie, d'un véhicule tracteur (2; 30) qui, par l'intermédiaire d'un accouplement (23), tire ou pousse une remorque (16; 34) équipée d'au moins un frein (18) de remorque, dans le cas duquel, lors d'un freinage, est produit dans le véhicule tracteur (2; 30) un signal de demande d'énergie qui collabore au moins à déterminer l'amenée d'énergie au frein (28) du tracteur et dont le système fait dériver un signal d'envoi d'énergie à la remorque qui collabore au moins à commander le frein (18) de la remorque, la force d'accouplement qui apparaît dans l'accouplement (23) étant régulée au moyen du signal d'envoi d'énergie à la remorque
caractérisé
par le fait qu'il est reconnu qu'il y a surcharge lorsque, en présence d'un signal de demande d'énergie donné, le signal d'envoi d'énergie à la remorque ne décroît pas seulement temporairement.

2. Procédé selon la revendication 1, caractérisé par le fait qu'il n'est reconnu qu'il y a surcharge que pour une valeur prédéterminée de la décroissance du signal d'envoi d'énergie à la remorque.

3. Procédé selon l'une des revendications 1 ou 2, caractérisé par le fait que dans le tracteur (2; 30) se fait un réglage du signal d'envoi d'énergie à la remorque aux fins de la régulation de la force de l'accouplement.

4. Procédé selon l'une des revendications 1 ou 2, caractérisé par le fait que dans la remorque (16; 34) se fait un réglage du signal d'envoi d'énergie à la remorque aux fins de la régulation de la force de l'accouplement.

5. Procédé selon l'une des revendications précédentes, caractérisé par le fait que lors de la reconnaissance d'une surcharge un dispositif d'alarme (4) est activé.

6. Procédé selon l'une des revendications précédentes, caractérisé par le fait que lors de la reconnaissance d'une surcharge la régulation de la force de l'accouplement est mise hors circuit.

7. Dispositif de surveillance au point de vue surcharge, du frein (28), dont il y a au moins un et qui est manoeuvré par amenée d'énergie, d'un véhicule tracteur (2; 30) qui, par l'intermédiaire d'un accouplement (23), tire ou pousse une remorque (16; 34) équipée d'au moins un frein (18) de remorque, dans le cas duquel, lors d'un freinage, est produit dans le véhicule tracteur (2; 30) un signal de demande d'énergie qui collabore au moins à déterminer l'amenée d'énergie au frein (28) du tracteur et dont le système fait dériver un signal d'envoi d'énergie à la remorque qui collabore au moins à commander le frein (18) de la remorque, la force d'accouplement qui apparaît dans l'accouplement (23) étant régulée sur une valeur prescrite au moyen du signal d'envoi d'énergie à la remorque, à l'aide d'un capteur (1; 32) de l'énergie du tracteur, qui saisit le signal de demande d'énergie, d'un capteur (24; 32) de l'énergie de la remorque, qui saisit le signal d'envoi d'énergie à la remorque et d'un dispositif de traitement (7) qui reçoit les signaux de ces capteurs (1; 24; 32),
caractérisé
par le fait que le circuit de traitement (7) est conçu de façon à déterminer, pour le signal de demande d'énergie réelle, le signal d'envoi d'énergie à la remorque normal, pour lequel la force de l'accouplement prend la valeur prescrite, à comparer ce signal avec le signal réel d'envoi d'énergie à la remorque et à émettre un signal de sortie lorsque le signal réel d'envoi d'énergie à la remorque est inférieur, pendant un intervalle de temps prédéterminé, au signal normal d'envoi d'énergie à la remorque.

8. Dispositif selon la revendication 7, caractérisé par le fait que le circuit de traitement (7) n'émet le signal de sortie que lorsque l'écart entre le signal réel d'envoi d'énergie à la remorque et le signal normal d'envoi d'énergie à la remorque a atteint au moins une valeur prédéterminée.

9. Dispositif selon les revendications 7 ou 8 avec un capteur de force (15) qui saisit la force de l'accouplement et un régulateur (13) qui convertit le signal de ce capteur en un signal de commande pour un organe (26; 32) de commande d'envoi d'énergie à la remorque, caractérisé par le fait que l'organe (26; 32) de commande d'envoi d'énergie à la remorque est disposé sur le tracteur (2; 30).

10. Dispositif selon l'une des revendications 7 ou 8, avec un capteur de force (15) qui saisit la force de l'accouplement et un régulateur (13) qui convertit le signal de force de capteur en un signal de commande pour un dispositif (19; 33) de commande de la remorque, caractérisé par le fait que le dispositif (19; 33) de commande de la remorque est disposé sur la remorque (16; 34).

11. Dispositif selon l'une des revendications précédentes, caractérisé par un dispositif d'alarme (4) que peut activer le signal de sortie du circuit de traitement (7) et dont l'entrée est reliée avec la sortie (6), dont il y a au moins une, du circuit de traitement (7).

12. Dispositif selon l'une des revendications 9 à 11, caractérisé par le fait que le régulateur (13) peut être mis hors circuit par le signal de sortie du dispositif de traitement (7) et qu'une entrée (12) du régulateur est reliée avec une sortie (10), dont il y a au moins une, du circuit de traitement (7).

13. Procédé selon l'une des revendications 1 à 6, caractérisé par le fait qu'il est reconnu qu'il y a surcharge du frein (18) de la remorque lorsque, en présence d'un signal de demande d'énergie donné, le signal d'envoi d'énergie à la remorque ne croît pas que temporairement.
